# EUROPÄISCHE PATENTSCHRIFT

(11) **EP 3 107 752 B1**
(45) Veröffentlichungstag und Bekanntmachung des Hinweises auf die Patenterteilung: **11.07.2018**
(21) Anmeldenummer: 15706719.0
(22) Anmeldetag: 13.02.2015
(51) Int. Cl.: H02J 7/02

(54) **ANORDNUNG EINER INDUKTIONSSPULE AN EINEM UNTERBODEN EINES KRAFTWAGENS UND VERFAHREN ZUM INDUKTIVEN LADEN EINES ENERGIESPEICHERS EINES KRAFTWAGENS**
ARRANGEMENT OF AN INDUCTION COIL ON AN UNDERBODY OF A MOTOR VEHICLE, AND METHOD FOR INDUCTIVELY CHARGING AN ENERGY ACCUMULATOR OF A MOTOR VEHICLE
AGENCEMENT D'UNE BOBINE D'INDUCTION AU NIVEAU D'UN DESSOUS DE CAISSE D'UN VÉHICULE À MOTEUR ET PROCÉDÉ POUR ASSURER LA CHARGE INDUCTIVE D'UN ACCUMULATEUR D'ÉNERGIE D'UN VÉHICULE À MOTEUR

(30) Priorität: 19.02.2014 DE 102014203037
(43) Veröffentlichungstag der Anmeldung: 28.12.2016
(73) Patentinhaber: Bayerische Motoren Werke Aktiengesellschaft, 80809 München (DE)
(72) Erfinder: HERZOG, Torsten, 80796 München (DE); BIRKHOLZ, Andreas, 81929 München (DE)
(86) Internationale Anmeldenummer: PCT/EP2015/053077
(87) Internationale Veröffentlichungsnummer: WO 2015/124502

(56) Entgegenhaltungen:
- WO-A1-2013/125372
- JP-A- 2012 188 116

## Beschreibung

Die Erfindung betrifft eine Anordnung wenigstens einer Induktionsspule zum induktiven Laden eines Energiespeichers an einem Unterboden eines Kraftwagens. Des Weiteren betrifft die Erfindung ein Verfahren zum induktiven Laden eines Energiespeichers eines Kraftwagens unter Vermittlung einer Induktionsspule des Kraftwagens.

Derartige Induktionsspulen eignen sich besonders gut zum berührungslosen Laden eines Energiespeichers, wie beispielsweise einer Fahrzeugbatterie, wobei der Kraftwagen zum Laden des Energiespeichers lediglich über einen längeren Zeitraum über einer Ladevorrichtung zu platzieren ist, welche ein sich änderndes Magnetfeld emittiert. Derartige Ladevorrichtungen können beispielsweise an öffentlichen Parkplätzen vorgesehen sein, wobei bestimmte Parkzeiten von mit einer solchen Induktionsspule ausgestatteten Kraftwagen genutzt werden, um den Energiespeicher (Fahrzeugbatterie) während des Parkens des Kraftwagens zu laden. Gerade im Vergleich zum Tankvorgang beim Betanken von Kraftwagen mit fossilen Brennstoffen ergeben sich dann sowohl Vorteile darin, dass keine spezielle Tankstelle aufgesucht werden muss um den Energiespeicher zumindest teilweise zu füllen, als auch, dass das Laden des Energiespeichers berührungslos erfolgt und dementsprechend besonders ergonomisch und ohne weiteres Zutun durch den Fahrer vonstattengehen kann. Des Weiteren werden gerade im Gegensatz zum Betanken mit fossilen Brennstoffen während des Tankvorgangs, beziehungsweise während des Ladens des Energiespeichers keine Kraftstoffdämpfe freigesetzt.

Die am Unterboden angeordnete Induktionsspule derartiger zum induktiven Laden ausgelegter Kraftwagen wird auch als sogenannte Sekundärspule oder als CPM (Car Pad Module) bezeichnet. Wird dieser Kraftwagen nun über einer Ladevorrichtung zum induktiven Laden des Energiespeichers des Kraftwagens geparkt, so wird eine sogenannte Primärspule der Ladevorrichtung an die an dem Unterboden des Kraftwagens angeordnete Sekundärspule herangeführt, relativ zu dieser Sekundärspule ausgerichtet und ein sich mit einer bestimmten Frequenz änderndes Magnetfeld mittels der Primärspule aufgebaut. Durch dieses sich ändernde Magnetfeld wird unter Vermittlung der Sekundärspule der Energiespeicher (Fahrzeugbatterie beziehungsweise Hochvoltbatterie) des Kraftwagens geladen.
Allerdings kann es infolge der elektromagnetischen Strahlung, bzw. durch sich ändernde Magnetfelder, bzw. E-Felder (elektrische Felder) beim Laden zu Unverträglichkeiten mit anderen elektronischen Komponenten, bzw. zu deren Fehlfunktion kommen.

Aus der gattungsbildenden JP 2012-188116 A ist bereits eine Anordnung wenigstens einer Induktionsspule zum induktiven Laden eines Energiespeichers an einem Unterboden eines Kraftwagens bekannt. Dabei ist die Induktionsspule in Fahrzeughochrichtung nach oben hin mit einem Abdeckelement abgedeckt, welches einen Schirmbereich zum Abschirmen elektromagnetischer Felder aufweist.
Aufgabe der vorliegenden Erfindung ist es, eine Anordnung der eingangs genannten Art zu schaffen, bei welcher die beim Laden emittierte elektromagnetische Strahlung auf besonders günstige Art begrenzt werden kann.
Diese Aufgabe wird durch eine Anordnung mit den Merkmalen des Patentanspruchs 1, gelöst. Vorteilhafte Ausgestaltungen mit zweckmäßigen und nicht-trivialen Weiterbildungen der Erfindung sind in dem Anspruch 2 angegeben. Um eine Anordnung der im Oberbegriff des Patentanspruchs 1 angegebenen Art zu schaffen, mittels welcher die beim Laden emittierte elektromagnetische Strahlung auf besonders günstige Art begrenzt werden kann, ist es erfindungsgemäß vorgesehen, dass die Induktionsspule in Fahrzeughochrichtung nach oben hin zumindest teilweise durch ein Abdeckelement abgedeckt ist, welches wenigstens einen Schirmbereich zum Abschirmen elektromagnetischer Felder der Induktionsspule aufweist.
Mittels des Abdeckelements, welches Teil des Unterbodenschutzes ist, kann die Induktionsspule (Sekundärspule) des Kraftwagens besonders zuverlässig aufgenommen werden. Das Abdeckelement weist dazu eine Mulde oder bzw. Vertiefung auf, in welcher die Induktionsspule aufgenommen ist. Gerade in dieser Mulde bzw. Vertiefung liegt die Induktionsspule flächig an dem Abdeckelement an, bzw. wird bereichsweise von jeweiligen Rändern der Mulde umschlossen, weshalb es besonders empfehlenswert ist, wenn das Abdeckelement dort einen Schirmbereich aufweist, bzw. die Mulde, bzw. die Vertiefung, in welcher die Sekundärspule aufgenommen ist, als Schirmbereich ausgebildet ist. Dieser Schirmbereich verhindert besonders effizient eine weitreichende elektromagnetische Strahlung. Mit anderen Worten wird mittels dieses Schirmbereichs die elektromagnetische Strahlung lokal besonders stark begrenzt, wodurch insbesondere elektrische Fahrzeugkomponenten des Kraftwagens, die oberhalb des Schirmbereichs, bzw. des Abdeckelements liegen von elektromagnetischen Störeinflüssen weitgehend abgeschirmt werden. Zu derartigen Fahrzeugkomponenten gehören beispielsweise Entertainmentsysteme des Kraftwagens, wie z.B. ein Radio. Diese Fahrzeugkomponenten werden dementsprechend auch beim Laden des Energiespeichers, welcher z.B. als Hochvoltbatterie des Kraftwagens zur Versorgung eines Elektromotors ausgebildet ist, infolge der Abschirmung durch das Abdeckelement, bzw. dessen Schirmbereich kaum durch elektromagnetische Strahlung gestört. Somit ist es nicht erforderlich zur Erhöhung der EMV (elektromagnetische Verträglichkeit) besondere, kostenintensive Vorkehrungen, zu denen z.B. die zusätzliche Schirmung von Kabeln der Fahrzeugkomponenten gehört, zu treffen. Stattdessen wird mittels des Schirmbereichs die elektromagnetische Strahlung auf besonders engem Raum und damit lokal begrenzt. Der zwischen den abzuschirmenden Fahrzeugkomponenten und der Induktionsspule angeordnete Schirmbereich, bzw. das Abdeckelement könnte zu diesem Zweck beispielsweise aus Aluminium gebildet sein, welches einerseits besonders leicht ist und dementsprechend zur Einsparung von Energie beiträgt und mittels welchem andererseits eine besonders gute Abschirmung erreicht werden kann.

Die Zeichnung zeigt in:
- Fig. 1: eine Draufsicht auf ein einen Schirmbereich aufweisendes Abdeckelement als Teil eines Unterfahrschutzes eines Kraftwagens;
- Fig. 2: eine perspektivische Unteransicht auf das Abdeckelement in dessen Schirmbereich vorliegend eine Induktionsspule aufgenommen ist;
- Fig. 3: eine Unteransicht auf den Unterfahrschutz des Kraftwagens, wobei in dem Schirmbereich des Abdeckelements die Induktionsspule angeordnet ist;
- Fig. 4: eine Schnittansicht gemäß einer Schnittlinie A-A in Fig. 3.

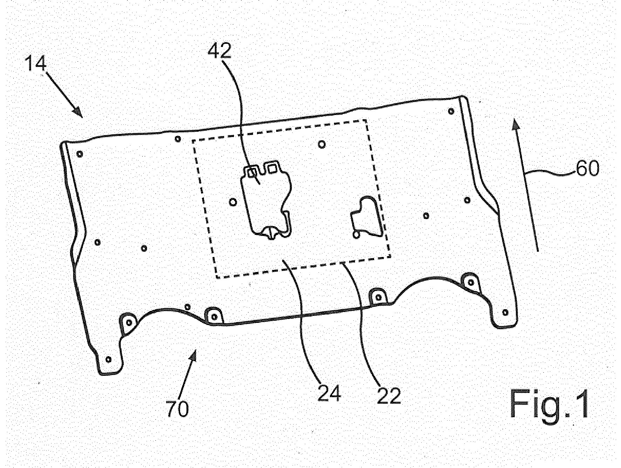

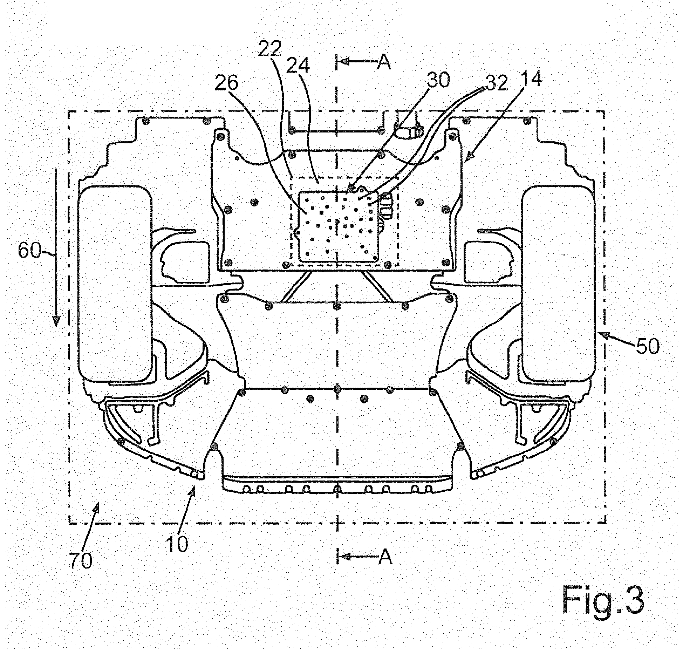

Fig. 1 zeigt eine Draufsicht auf einen Unterfahrschutz 14 und somit einen Teil eines Kraftwagens 70. Weitere Teile des Kraftwagens 70 sind in Fig. 3 dargestellt. Der Unterfahrschutz 14 kann an einem Unterboden 10 des Kraftwagens 70 fixiert werden, wie ebenfalls in Fig. 3 gezeigt ist. Der Unterfahrschutz 14 weist ein Abdeckelement 22 auf, welches zur Verdeutlichung gestrichelt umrandet ist und vorliegend aus Gründen der einfacheren Fertigung stoffschlüssig mit dem Unterfahrschutz 14 verbunden, bzw. zusammen mit dem Unterfahrschutz 14 hergestellt ist. Das Abdeckelement 22 entspricht dabei vorliegend einer Mulde, bzw. einer muldenförmigen Vertiefung, in welcher eine in Fig. 1 nicht dargestellte Induktionsspule 20 angeordnet werden kann. Der Unterfahrschutz 14 und das Abdeckelement 22 sind somit vorliegend einteilig ausgebildet. Mit anderen Worten entspricht vorliegend das Abdeckelement 22 einem Teilbereich des Unterfahrschutzes 14. Es ist klar, dass das Abdeckelement 22 jedoch auch als von dem Unterfahrschutz 14 getrenntes Bauteil, also z.B. als mulden- bzw. schalenförmiges Bauteil ausgebildet sein könnte, welches dann mittels jeweiliger Fixierungselemente, z.B. Schrauben an dem Unterfahrschutz 14 befestigt werden könnte. Das Abdeckelement 22 weist einen Schirmbereich 24 auf, welcher einem Teilbereich des Abdeckelements 22 entsprechen kann. Vorliegend erstreckt sich der Schirmbereich 24 jedoch über das gesamte Abdeckelement 22. Der Schirmbereich 24 dient zum Abschirmen elektromagnetischer Felder der Induktionsspule 20, bzw. zum Abschirmen elektromagnetischer Felder beim Laden der Induktionsspule 20. Um ein besonders effizientes Abschirmen zu ermöglichen, ist zumindest der Schirmbereich 24 des Abdeckelements 22 aus Aluminium gebildet. Der Unterfahrschutz 14 erstreckt sich im Wesentlichen von einer Seite des Kraftwagens 70 zu einer dazu gegenüberliegenden Seite an dem Unterboden 10, wie durch eine mittels eines Pfeils verdeutlichte Fahrtrichtung 60 (Vorwärtsfahrtrichtung) verdeutlicht ist. Das Abdeckelement 22 weist eine Öffnung auf, welche vorliegend mittels eines Ölablassdeckels 42 abgedeckt ist.

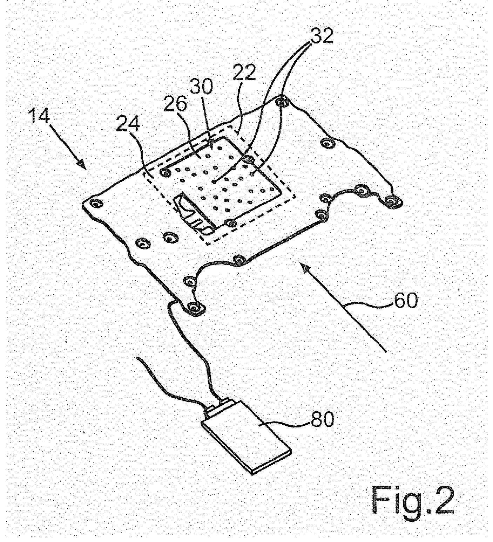

Fig. 2 zeigt den Unterfahrschutz 14 aus einer perspektivischen Unteransicht wodurch dementsprechend eine zur in Fig. 1 dargestellten Seite des Unterfahrschutzes 14 gegenüberliegende Seite des Unterfahrschutzes 14 erkennbar ist. Dadurch ist ein weiteres Abdeckelement 26 erkennbar, welches die Induktionsspule 20 vorliegend verdeckt, weshalb die Induktionsspule 20 in Fig. 2 nicht erkennbar ist. Mit anderen Worten ist die Induktionsspule 20 des Kraftwagens 70 also zwischen dem Schirmbereich 24 des Abdeckelements 22 und dem weiteren Abdeckelement 26 angeordnet. Die vorliegend durch das weitere Abdeckelement 26 verdeckte Induktionsspule 20 ist mit einem WCU 80 (Wireless Control Unit) verbunden. Mittels des WCU 80 kann beispielsweise ein induktiver Ladevorgang freigegeben werden, wodurch die Induktionsspule 20 für einen Ladevorgang aktiviert werden, bzw. der Ladevorgang auch verweigert werden kann. Es ist klar, dass das WCU 80 auch in die Induktionsspule 20 integriert sein könnte und dementsprechend ebenfalls durch das Abdeckelement 22, bzw. das weitere Abdeckelement 26 abgedeckt, bzw. geschützt werden könnte. Das WCU 80 dient somit als Diebstahlschutz, da damit das induktive Laden wirksam unterbunden werden kann. Das weitere Abdeckelement 26 weist einen Feldführungsbereich 30 mit jeweiligen Feldführungselementen 32 auf. Die Feldführungselemente 32 weisen jeweilige Ferrite auf, mittels welchen die elektromagnetischen Felder beim Laden der Induktionsspule 20 besonders effizient ausgerichtet werden können und dementsprechend der Wirkungsgrad beim Ladevorgang durch besonders exakte Ausrichtung der elektromagnetischen Felder erhöht werden kann. Der Feldführungsbereich 30 ist vorliegend sozusagen als Matrix ausgebildet, in welcher die Feldführungselemente 32 aufgenommen sind. Dementsprechend sind die Feldführungselemente 32 vorliegend in den Feldführungsbereich 30 eingelegt, bzw. mit diesem gefügt.

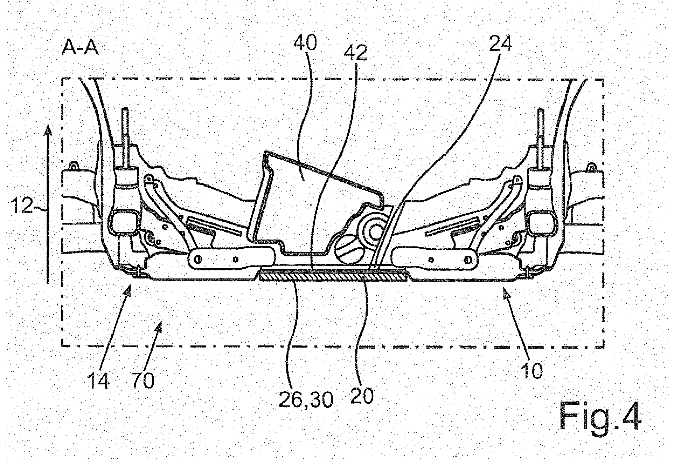

Fig. 3 zeigt eine Unteransicht auf den Unterfahrschutz 14 des Kraftwagens 70, wobei in dem Schirmbereich 24 des Abdeckelements 22 die Induktionsspule 20 angeordnet, bzw eingelegt ist. Dies ist besonders deutlich in Zusammenschau mit Fig. 4 zu erkennen. Fig. 4 zeigt eine Schnittansicht gemäß einer Schnittlinie A-A in Fig. 3. Wie aus Fig. 3 hervorgeht, ist der Unterfahrschutz 14 in Fahrtrichtung 60 hinter einer Vorderachse 50 an dem Unterboden 10 des Kraftwagens 70 angeordnet. Mit anderen Worten ist also vorliegend der Unterfahrschutz 14 zwischen der Vorderachse 50 und einer (hier nicht dargestellten) weiteren Achse, z.B. einer Hinterachse des Kraftwagens 70 angeordnet. In Fig. 4 ist gezeigt, dass gemäß einer Fahrzeughochrichtung 12, welche durch einen Pfeil verdeutlicht ist, oberhalb des Ölablassdeckels 42, bzw. oberhalb des Schirmbereichs 24 des Abdeckelements 22 eine Ölwanne 40 des Kraftwagens 70 angeordnet ist. Durch Abmontieren des Ölablassdeckels 42 (bei vorangehendem Entfernen des weiteren Abdeckelements 26 sowie der Induktionsspule 20) wird die Öffnung freigegeben, wodurch ein Teil der Ölwanne 40 freigelegt und damit ein Ablassen von Öl ermöglicht wird.

Die Induktionsspule 20 ist also, wie in Fig. 4 erkennbar ist, in der Fahrzeughochrichtung 12 nach oben hin vorliegend vollständig, jedoch zumindest teilweise durch das Abdeckelement 22 abgedeckt, welches den Schirmbereich 24 zum Abschirmen elektromagnetischer Felder der Induktionsspule 20 aufweist. Der Schirmbereich 24 dient dabei der Abschirmung elektromagnetischer Felder beim Laden eines hier nicht dargestellten Energiespeichers (welcher z.B. als eine Hochvoltbatterie ausgebildet ist) mittels der Induktionsspule.

Mit anderen Worten wird beim Ladevorgang der Schirmbereich 24 des die Induktionsspule 20 in der Fahrzeughochrichtung 12 nach oben hin bedeckenden Abdeckelements 22 zum Abschirmen elektromagnetischer Felder herangezogen.

Das Abdeckelement 22 dient dabei zur Impedanzanpassung und Feldführung elektromagnetischer Felder beim induktiven Laden.

Die Induktionsspule 20 ist in der Fahrzeughochrichtung 12 nach unten hin vorliegend vollständig, jedoch zumindest teilweise durch das weitere Abdeckelement 32 abgedeckt, welches den Feldführungsbereich 30 mit den jeweiligen Feldführungselementen 32 zur Feldverstärkung und Feldausrichtung der elektromagnetischen Felder beim induktiven Laden aufweist.

Durch das Anordnen der Induktionsspule 20, welche auch als CPM (Car Pad Module) bezeichnet wird, zwischen dem aus Aluminium gebildeten Schirmbereich 24 des Abdeckelements 22 und dem weiteren Abdeckelement 26, welches auch als CPM-Deckel bezeichnet wird, erfolgt einerseits eine besonders effiziente Abschirmung der elektromagnetischen Felder, als auch eine besonders effiziente Impedanzanpassung an eine Gesamtimpedanz eines Schwingkreises und eine dementsprechend effiziente Energieübertragung. Durch den aus Aluminium gebildeten Schirmbereich 24, bzw. durch den Unterfahrschutz 14, welcher ebenfalls aus Aluminium gebildet sein kann, erfolgt eine besonders effiziente Wärmeableitung beim Laden infolge der hohen Wärmeleitfähigkeit des Aluminiums. Des Weiteren kann elektromagnetische Strahlung (EM) durch Aluminium besonders gut abgeschirmt werden und somit die EMV - Verträglichkeit erhöht werden. Durch den Einsatz von Aluminium kann zudem Gewicht eingespart werden, wobei zusätzlich durch das weitere Abdeckelement 26 ein stabiler Rammschutz zum Schutz der Induktionsspule 20 bereitgestellt wird. Das Abdeckelement 26 kann aus einem glasfaserverstärktem Kunststoff (GFK) gebildet sein, so dass an dessen Feldführungsbereich 30 die Feldführungselemente 32, welche die Ferrite aufweisen, besonders stabil gefügt sein können.

## Patentansprüche

1. Anordnung wenigstens einer Induktionsspule (20) zum induktiven Laden eines Energiespeichers an einem Unterboden (10) eines Kraftwagens (70), wobei die Induktionsspule (20) in Fahrzeughochrichtung (12) nach oben hin zumindest teilweise durch ein Abdeckelement (22) abgedeckt ist, welches wenigstens einen Schirmbereich (24) zum Abschirmen elektromagnetischer Felder der Induktionsspule (20) aufweist, wobei die Induktionsspule (20) in Fahrzeughochrichtung (12) nach unten hin zumindest teilweise durch ein weiteres Abdeckelement (32) abgedeckt ist, **dadurch gekennzeichnet, dass** das Abdeckelement (22) Teil eines Unterbodenschutzes des Kraftwagens ist und eine Mulde aufweist, in welcher die Induktionsspule (20) aufgenommen ist, und dass das weitere Abdeckelement (32) wenigstens einen Feldführungsbereich (30) mit jeweiligen Feldführungselementen (32) zur Feldverstärkung und Feldausrichtung der elektromagnetischen Felder beim induktiven Laden aufweist, wobei der Schirmbereich (24) aus Aluminium gebildet ist.

2. Anordnung nach Anspruch 1, **dadurch gekennzeichnet, dass** die Feldführungselemente (32) jeweilige Ferrite aufweisen.

## Claims

1. An arrangement of at least one induction coil (20) for inductively charging an energy storage mechanism on an underbody (10) of a motor vehicle (70), wherein the induction coil (20) towards the top in the vertical direction (12) of the vehicle is covered at least partially by a covering element (22) which has at least one shield region (24) for shielding electromagnetic fields of the induction coil (20), wherein the induction coil (20) towards the bottom in the vertical direction (12) of the vehicle is covered at least partially by a further covering element (32), **characterised in that** the covering element (22) is part of an underbody guard of the motor vehicle and has a depression in which the induction coil (20) is received, and **in that** the further covering element (32) has at least one field guidance region (30) with respective field guidance elements (32) for field strengthening and field orientation of the electromagnetic fields during inductive charging, the shield region (24) being formed from aluminium.

2. An arrangement according to Claim 1, **characterised in that** the field guidance elements (32) have respective ferrites.

## Revendications

1. Agencement d'au moins une bobine d'induction (20) permettant la charge par induction d'un accumulateur d'énergie situé sur le dessous de caisse (10) d'un véhicule (70), la bobine d'induction (20) étant recouverte au moins partiellement vers le haut dans la direction verticale du véhicule (12) par un élément de recouvrement (22) qui comporte au moins une zone formant écran (24) permettant d'obtenir une protection vis-à-vis des champs électromagnétiques de la bobine d'induction (20), la bobine d'induction (20) étant également recouverte, au moins en partie vers le bas dans la direction verticale (12) du véhicule par un autre élément de recouvrement (32),
**caractérisé en ce que**
l'élément de recouvrement (22) est une partie d'une protection du dessous de caisse du véhicule et comporte un renfoncement dans lequel est logée la bobine d'induction (20), et, l'autre élément de recouvrement (32) comporte au moins une zone de guidage de champ (30) ayant des éléments de guidage de champ respectifs (32) permettant d'amplifier et d'orienter les champs électromagnétiques lors d'une charge par induction, la zone formant écran (24) étant réalisée en aluminium.

2. Agencement conforme à la revendication 1,
**caractérisé en ce que**
les éléments de guidage du champ (32) renferment respectivement de la ferrite.
